# EUROPEAN PATENT APPLICATION

(11) **EP 1 986 140 A2**
(43) Date of publication of application: **29.10.2008**
(21) Application number: 08007246.5
(22) Date of filing: 11.04.2008
(51) Int. Cl.: G06N 3/12, G06N 3/08

(54) **Network for performing input-output function and computer implemented method for generating network**

(30) Priority: 24.04.2007 US 739144
(71) Applicant: MITSUBISHI ELECTRIC CORPORATION, Chiyoda-ku Tokyo 100-8310 (JP)
(72) Inventor: Yedidia, Jonathan S., Cambridge, MA 02139 (US)
(74) Representative: Pfenning, Meinig & Partner GbR

(57) **Abstract**

A network performs an input-output function. The network includes a set of cells. Each cell has an identical structure, and neighboring cells are connected to each other to form a network. Each cell further includes a set of logic units configured to perform an input-output function, and in which the logic units output factor signals, inter-cellular signals and developmental output signals, the factor signals being input signals for the set of logic units in the same cell, the inter-cellular signals being input signals for the set of logic units in the neighboring cells, and the developmental output signals initiating development events, and in which developmental input signals to the logic units are set after the development events for the set of logic units in the same cell, and in which a structure of the set of logic units in each cell is identical.

## Description

### Field of the invention

This invention relates generally to logic circuits, and more specifically to logic circuits arranged in multi-cellular networks.

### Background of the invention

**Natural and artificial evolution**

Designing large analog or digital logic circuits can be a very complex task. It is worthwhile, as one tries to design ever more complicated artificial machines, to understand the principles by which complex natural "machines" such as plants and animals are created.

It is generally agreed that natural organisms are "designed" by the blind and random process of evolution. In the conventional description of evolution, a population of organisms becomes progressively better adapted to its environment through the selection and more rapid reproduction of the fittest organisms in the population. Humans have for many centuries exploited the artificial selection of natural organisms, such as the breeding of domesticated animals and the cultivation of useful plants.

More recently, starting with the work of John Holland, there has been a great deal of interest in designing machines or computer programs using a form of artificial evolution, known as a "genetic algorithm." Genetic algorithms take many different forms, depending on the details of the artificial evolutionary process, and also on the structure of the system being evolved, John Henry Holland, "A universal computer capable of executing an arbitrary number of subprograms simultaneously," Proc. Eastern Joint Comp. Conf. pp. 108-112. 1959, and John Henry Holland, "Iterative circuit computers," Proc. Western Joint Comp. Conf. pp. 259-265, 1960, U.S. Patent No. 4,697,242, issued to Holland et al., September 29, 1987, "Adaptive computing system capable of learning and discovery."

John Koza has advocated for many years one of the most important variants of genetic algorithms, which he calls "genetic programming." In genetic programming, computer programs, typically written in Lisp, are evolved through a process of artificial evolution that involves "mutating" the programs by altering sub-branches of the computation tree representing the program, U.S. Patent 4,935,877 issued to Koza, June 19, 1990, "Non-linear genetic algorithms for solving problems," and U.S. Patent 6,360,191 issued to Koza et al. on March 19, 2002, "Method and apparatus for automated design of complex structures using genetic programming."

Genetic programming and genetic algorithms more generally, have had some successes creating interesting and useful systems and programs. However, it is difficult to specify exactly what problems can and cannot be solved using state-of-the-art genetic algorithms, and current versions of genetic algorithms have not widely replaced more conventional software and hardware design strategies.

**Multi-cellular organisms**

Besides the fact that multi-cellular organisms are designed using the process of evolution, another common feature of complex plants and animals is that they all begin life as a single cell, which undergoes a complex process of development through cell division to mature into an adult.

Though there are typically many different cell types in a mature multi-cellular organism, all the different cells of the organism, with the exception of sperm and egg cells, share an identical genetic specification in their DNA. The different behavior of cells with identical genetic specifications is the result of the cells having different histories and being subjected to different environments.

More specifically, the behavior of a biological cell is controlled by complex genetic regulatory mechanisms that determine which genes are transcribed into messenger RNA and then translated into proteins. One very important regulatory mechanism are the proteins called "transcription factors" that bind to DNA regulatory regions upstream of the protein coding regions of genes, and participate in the promotion or inhibition of the transcription of DNA into RNA. The different histories of two cells might lead to one having a large concentration of a particular transcription factor, and the other having a low concentration, and thus the two cells would express different genes, even though they had identical DNA.

Another important mechanism that controls the differential development of different types of cells in a multi-cellular organism is the biochemical signaling sent between cells. Signals such as hormones have the effect of directing a cell down a particular developmental pathway.

In general, the transcription factors, hormones, and multitude of other control mechanisms used in biological cells are organized into a network which can be represented as a "circuit" where the state of the system is characterized by the concentrations of the different biochemical ingredients. In fact, biologists have begun generating wiring diagrams to help summarize biological circuits, see for example, Longabaugh, W. J. R., Davidson, E. H. and Bolouri, H. "Computational representation of developmental genetic regulatory networks." Dev. Biol. 283, 1-16, 2005.

**Theoretical perspective on the design of multi-cellular organisms**

A natural question is what theoretical advantages exist, from the point of view of designing organisms using evolution, to using an *identical* genetic specification for all the cells in a multi-cellular organism.

One potential advantage is that relatively small changes to the genetic specification of the organism can concurrently alter the behavior of many different kinds of cells at many different times during the development of the organism. Therefore, if there is the possibility of an advantageous change to the circuitry controlling a cell, then it can be found once and used many times instead of needing to find the same advantageous mutation repeatedly for each of the cells in the organism.

Another related potential advantage is that a highly complicated organism can be specified in a relatively compact way. If each of the trillions of cells in a complex organism like a human had to be separately specified, then the overall amount of information required to describe the human genome would be multiplied more than a trillion-fold. Clearly, it is much more efficient to re-use the identical circuitry in many different types of cells.

On the other hand, the constraint that each cell in an organism should share an identical genetic specification clearly causes complications from the point of view of design. For example, it is important that genes that are designed to function in one type of cell at one point in development not cause problems for different type of cell at a different point in development. Clearly, good design of the control logic that turns genes on and off is essential to the proper functioning of a multi-cellular organism.

### Summary of the invention

A network performs an input-output function. The network includes a set of cells. Each cell has an identical structure, and neighboring cells are connected to each other to form a network.

Each cell further includes a set of logic units configured to perform an input-output function, and in which the logic units output factor signals, inter-cellular signals and developmental output signals, the factor signals being input signals for the set of logic units in the same cell, the inter-cellular signals being input signals for the set of logic units in the neighboring cells, and the developmental output signals initiating development events, and in which developmental input signals to the logic units are set after the development events for the set of logic units in the same cell, and in which a structure of the set of logic units in each cell is identical.

### Brief description of the drawings

Figures 1A-B are block diagrams of a network of processing cells according to an embodiment of the invention;

Figure 2 is a block diagram of a single processing cell according to an embodiment of the invention;

Figure 3 is a block diagram of a network developing over time according to an embodiment of the invention;

Figure 4 is a block diagram of an example network according to an embodiment of the invention;

Figure 5 is a block diagram of a network arranged as a random access memory according to an embodiment of the invention; and

Figure 6 is a block diagram detailing the wiring of a single cell in a network arranged as a random access memory according to an embodiment of the invention.

### Detailed description of the preferred embodiments

It is well known that the logic of information-processing devices can be separated from the details of their implementation. For example, a computer can be implemented using rotating gears, mechanical relays, vacuum tubes, transistors, or integrated circuits. What is important are the rules of the underlying logic; i.e., how the logical state of the system is updated and stored, rather than what particular technology is used to represent the logic.

Therefore, it seems reasonable that the advantages of a multi-cellular design of biological organisms, which clearly are "implemented" using biochemistry, could be transferable to logic circuit design for systems implemented using conventional hardware or software.

In particular, one expects that by designing logic circuits that use many processing cells, where each cell shares an *identical* specification, one gains significant advantages. First, a highly complex circuit including a very large number of cells can be specified compactly. Second, genetic algorithms can be utilized without having to "re-discover" advantageous mutations repeatedly for different cells in the system.

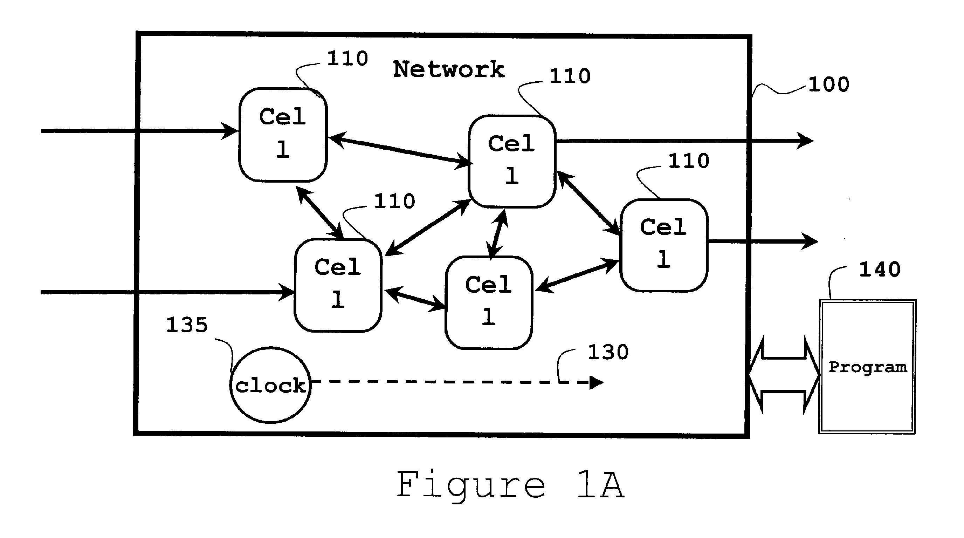

Figure 1A shows a multi-cellular circuit for performing an input-output function according to an embodiment of my invention. The circuit includes a set of *identical* cells 110, in which neighboring cells are connected to each other to form a network 100. The set can include one or more cells. Each cell is a processing node for the network performing the input-output function.

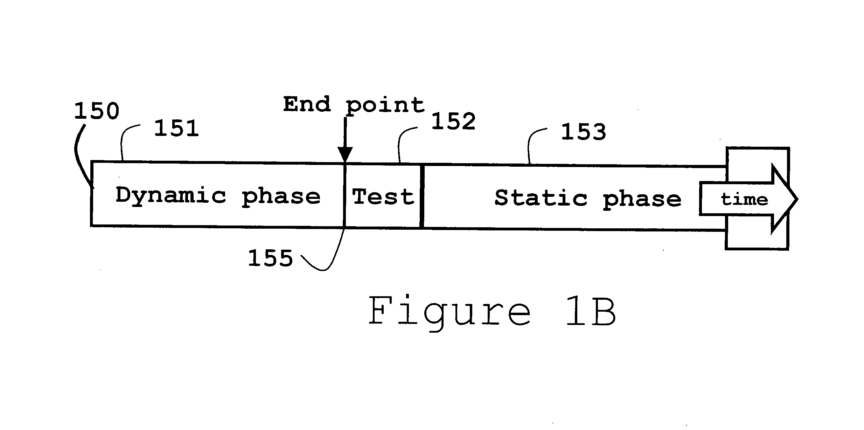

Figure 1B shows a method 150 for generating the network of cells. The method includes a dynamic or development phase 151, a test phase 152 and a static phase 153. During the development phase, a development method is used to generate the network. The development method can be in the form of software programs simulating the development of the network until the network becomes *"static."*

The test phase measures the "fitness" of the network to perform the input-output function. The static network can be in the form of hardware or software, or combinations thereof. The static network of cells can implement well-defined logic circuits such as a random-access memory (RAM) or an arithmetic logic unit (ALU). The static network of cells can also implement a more complicated or ambiguous function, such as those used in speech or image processing.

Associated with the network is a *"program"* 140. The program completely specifies the structure of the initial cell, and all rules for the development of a static network of identical cells from the initial single cell. The program effectively is the logical equivalent of DNA in living organisms. The program causes the single initial cell to duplicate itself.

The method that generates the static network from the single cell is a *"development method'* for the network. Because the method involves a dynamic, growing network of cells, the development method is normally performed by software. However, the final static network of cells can be implemented in either software or hardware.

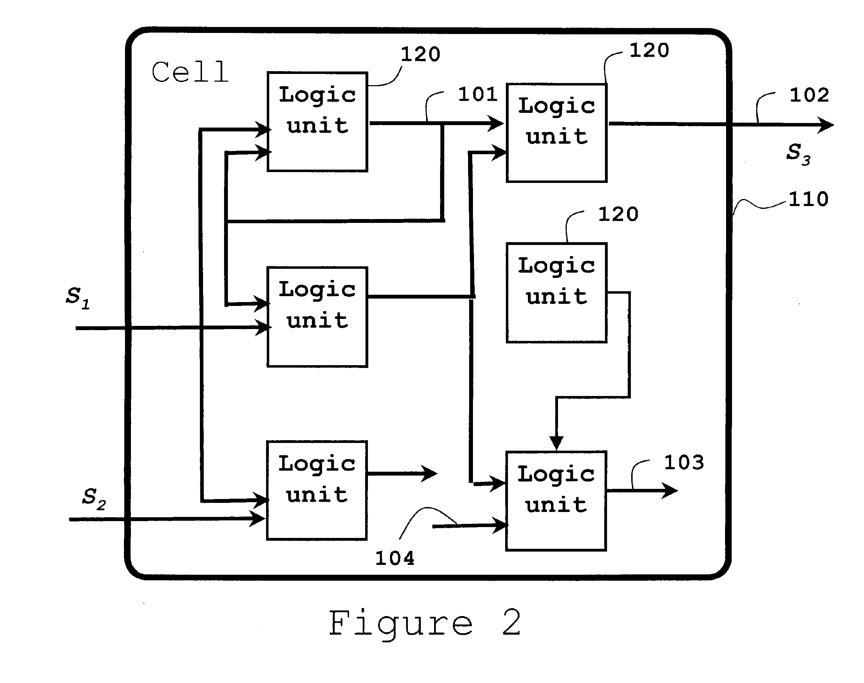

As shown in Figure 2, each cell in the initialized network includes the set of *"logic units"* 120, which are fully specified by the program 140. There can be one or more logic units in the set. Each logic unit implements a fixed input-output function, determining a set of output signals from a set of input signals, each with a known delay. The structure of the set of logic units is identical for each cell.

As shown in Figure 2, the set of output signals determined by the set of logic units 120 in the cell are generally partitioned into three classes. The first class of output signals is called *''factor signals"* 101. The factor signals are used as input signals for logic units 120 in the *same* cell. The second class of output signals is called *"inter-cellular signals"* 102. The inter-cellular signals are used as input signals for logic units in *neighboring* cells. The third class of output signals is called *"developmental output signals"* 103, which are used to initiate *"development events,"* such as cell duplication, cell re-arrangement, or cell elimination events. Other development events are also possible. In general, a development event involves a restructuring of the network 100.

There is also a class of *"developmental input signals"* 104, which are signals that are set after development events. The developmental input signals 104 are used as input signals for logic units in the same cell.

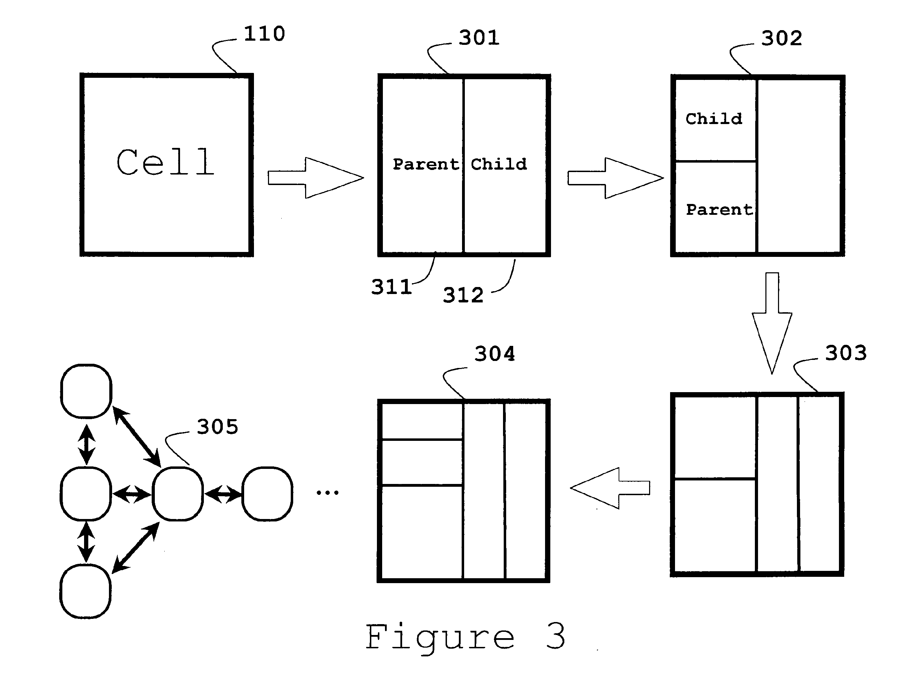

As shown in Figure 3, the initial network is a single initial cell 110. The network is initialized by setting all values of input signals to values specified by the program 140. The initial network can possibly be placed in an "environment" of other processing nodes that send the initial cell inter-cellular signals 102, or the initial cell is isolated from outside signals. The logic units in the single cell then begin *updating* according to *rules* of the program 140.

When a cell duplication event is triggered, two cells 301 are generated to replace the previously existing single cell. One of the new cells is referred to as the *"parent"* cell 311, and the other is called the *"child"* cell 312. The parent and child cell are neighbors and connected to each other. The cells are also neighbors of some sub-set of the neighbors of the original duplicated cell.

The parent cell and the child cell each contain *exactly the same* logic units as the original cell before duplication. Most of the output and input signal values are also set identically to their values in the original cell, but a set of developmental input signals 104 can be set differently in the parent cell and the child cell, to indicate the fact that a duplication event occurred, or to distinguish the parent cell from the child cell, or to otherwise record information about the cell duplication event. After cell duplication events are completed, the development of the network of cells continues 302-304, with each cell following the rules of its own copies of its logic units.

Cell elimination and cell re-arrangement events work similarly, except that when one is triggered, a cell is eliminated or rearranged in the network by connecting it to different neighbors, and its neighbors may be re-arranged so as to adopt a different structure.

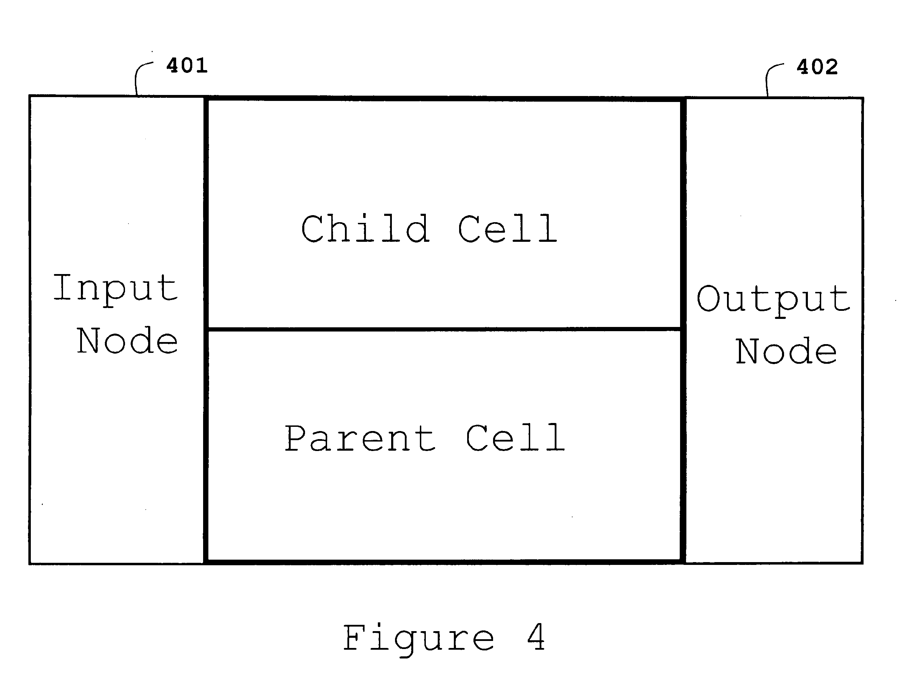

At some point in time specified by the program and referred to as the "end-point of development" 155, the network of cells is made static 305. All further development events, such as cell duplication or cell elimination or cell-rearrangement are prohibited. At that point the static network of cells is tested 152. To test the network, a set of "input nodes" 401 and a set of "output nodes" 402 are attached in pre-specified positions to the network as shown in Figure 4, as specified by the program. Each set can include one or more nodes. The input nodes are used to send inter-cellular signals into the network, while output nodes are used to collect inter-cellular signals from the network.

The static network is assigned a "fitness" value depending on how well the network performs the input-output function during the testing, and also possibly depending on how many computational resources, e.g., how many logic units and signals, the network uses. Depending on the fitness, the network can either be accepted as the final network, or the network can be re-developed. A skilled programmer can re-program the network manually. Alternatively, the reprogramming can use a randomized optimization process that generates a set of networks via alteration of programs for existing networks, and simulation of the development phase for the altered networks, and searches the set of networks for a particular network with a high fitness. As another alternative, a genetic algorithm can be used on a population of networks, to search for the network with high fitness.

**Network generated by the method**

The goal of the method is to generate a static network of cells that implement the desired input-output function. The inputs and outputs can include digital or analog signals or some combination thereof. The relationship between the output of the network and its input may depend on the state of the network, as influenced by a previous history of inputs.

Figure 1 shows the general structure of the static network of cells. The network includes cells that communicate with neighboring cells by sending and receiving signals. Some cells also receive signals from outside the network, while another fraction of the cells transmit signals out of the network. As described above, the goal is to construct a network where the output signals from the network have some correspondence to the input signals into the network, and where each cell includes identical logical circuitry.

An operation of the network can be synchronized by a timing signal 130 so that input signals and output signals are only sampled at discrete units of time, as is normally done in conventional modem digital circuits. Cells in such a network can normally be connected to a global clock 135 to keep the cells synchronized. Alternatively, the network can be unsynchronized with the logic units within the cells functioning with arbitrary delays. In an unsynchronized network, the cells can function in a distributed fashion, without any global synchronization.

**A RAM network**

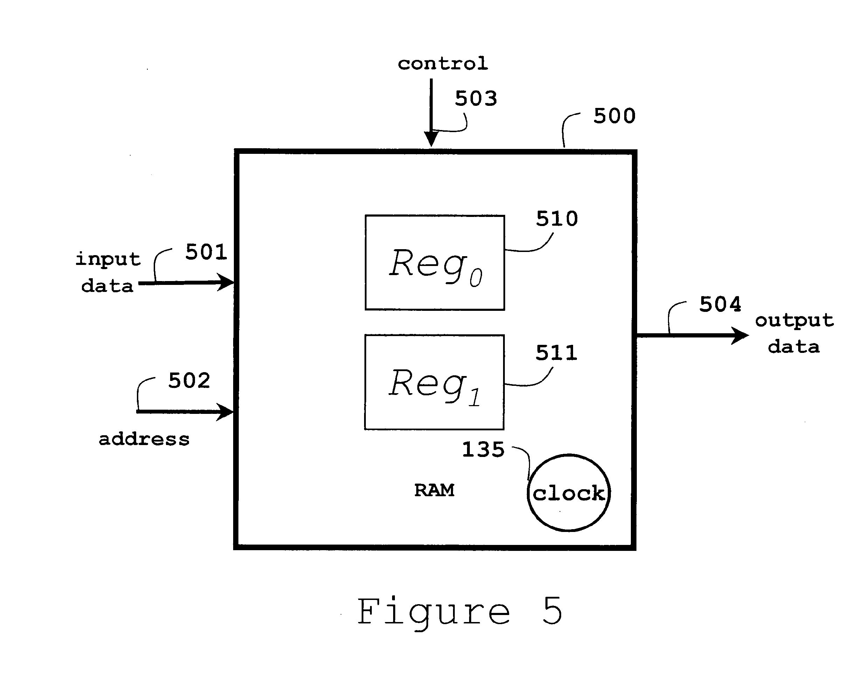

Figure 5 shows an example application where the network 500 functions as a random-access-memory (RAM). For this example, all the inputs and outputs are binary, and time is measured in discrete units of clock cycles, as measured by the clock 135. The specific details of the logic units inside the cells of the network 500 are described in detail below.

The RAM network has three input signals: input data 501, address 502, and control 503, and one output signal, output data 504. In general, the data and address has some number of bits. For example, if each has 16 bits, the RAM can store 2¹⁶ = 65536 different 16-bit data words. To keep this description simple, the RAM 500 uses 1-bit *"words"* for both the data and address, which means that the RAM store two 1-bit words. The control 503 indicates a 'read' or 'write' operation.

Thus, the example RAM network has three input bits and one output bit. I use the labels *In* for the input bit 501, *Address* for the address bit 502, *Control* 503 for the control bit, and Out for the output bit 504. I also use variables *Reg*₀ 510 and *Reg₁* 511, which act as one-bit register variables, which are initialized to zero. The register variables are used to describe the input-output function of the RAM network 500.

The register corresponding to the address bit is written if and only if the control bit is 1. For example, if *Control(t)=1,* and *Address(t)=0;* then *Reg₀(t)=In(t).* If the control bit is 0, then the registers simply retain its previous value. The output *Out(t+1)* at time *t+1* is then given by the value the register corresponding to the address *Address(t)* at time t. For example, if *Address*(*t*)*=1,* then *Out*(*t+1*)*=Reg₁*(*t*)*.*

It should be understood that the input-output function of the example RAM network is completely conventional. The novelty of the invention is not manifest in any particular desired input-output function of the network, but rather in how the network is constructed, and in the ultimate form of the network satisfying the input-output function and including only interconnected *identical* cells of logic units.

Notice that the desired input-output function can depend on the internal state of the network, as recorded in some form of memory. In my example, the internal state is recorded in the register variables, and the output depends on the internal state, as well as the input bits.

**Specification of a single cell**

The network initially has a single cell, together with the program 140 that specifies all the logic units 110 in that cell, along with any other information essential for the simulation of the network.

Figure 2 illustrates a single cell, which contains a set of logic units. Logic units receive some fixed integer number of input signals, including possibly zero input signals, and determine an output signal from the input signals. As an example, suppose that a logic unit takes two input signals *S₁* and S₂ and determines an output signal S₃. The output signal is some function of the input signals, after a given delay: *S₃(t +Δ*)*= f(S₁*(*t*), *S₂*(*t*)). All the output signals are determined from the input signals using functions of this form.

If an operation of the network is synchronized by a clock, then the delays are normally either one time unit or zero time units. If some of logic units have delays that are zero time units, then the program 140 is designed to avoid any feedback loops involving only zero-delay logic units.

If only binary signals are used, then all the signal values are logical zero or logical one, and the functions correspond to conventional logic functions like the AND function, the OR function, the exclusive-or XOR function, or other logic functions that can be specified using a truth-table.

Analog signals that have a continuous range of possible values can also be used, and quantized signals that have a finite set of possible values can also be used. The input signals and output signals of a logic unit can be an arbitrary mixture of binary, quantized, and analog signals.

**Different Types of signals**

Three different types of signals are used. The first type, called "factor signals" 101, are determined as output signals in a cell and then used as input signals for logic units in the *same* cell. The second type, called "inter-cellular signals" 102, are determined as output signals in a cell and used as input signals for logic units in *different* cells. The third type of signals are "developmental signals" 103. Output developmental signals do not directly serve as inputs for other logic units, but instead are used to trigger developmental events, such as cell duplication, elimination, or rearrangement. Input developmental signals 104 are set after a cell developmental event has occurred, and are used as input signals for logic units in the same cell.

It is possible for more than one logic unit to determine the same output signal. If this happens, then the value for that output signal must be reconciled between the potentially different values determined by the different logic units. That reconciliation is done using a pre-defined function of the values determined at each logic unit.

If the signals are all binary, then the predefined reconciliation function can be the logical OR function, so that if any one of the logic units outputs a value of 1 for that output signal, the output signal is 1. If the signals are continuous-valued, then the reconciliation function used can be a simple addition of the values of the output signals sharing the same label, or some more complicated function such as a soft-OR function, which extends the OR function to continuous values. As an example of a soft-OR function, if two signals *x₁* and *x₂* are continuous and restricted to the range [0.0, 1.0], then, the soft-OR function *f_{soft-OR}* can be *f_{soft-OR}* (x₁,x₂) = x₁ + x₂ - x₁x₂.

Inter-cellular signals are normally sent to each neighboring cell in the network. It is possible however, that the program also specifies some rules about the directionality of inter-cellular signals. For example, the program can specify that a particular intercellular signal is only sent to cells that are located to the 'right' of the sending cell.

If multiple cells send signals with identical labels to the same destination cell, then the value for that signal also needs to be reconciled. The reconciliation works in a similar way to the reconciliation for multiple logic units outputting the same signal. Thus, if the signals are binary, then the logical OR function is normally used. Therefore, if a cell receives an intercellular signal with the value 1 from any one of its neighbors, then the value of that signal is 1. If the signals are continuous-valued, then an addition function or soft-OR function can be used.

Reconciliation functions are specified ahead of time in the program 140 for the network. There is never any ambiguity about the correct value for any signal.

**Development signals**

Unlike factor signals and inter-cellular signals, output development signals 103 do not directly serve as inputs for logic units. Instead, the values of output development signals are triggers for the onset of a *"development event"* such as cell duplication, cell re-arrangement, or cell elimination. For example, a particular development signal might have a binary value, where the value 1 indicates that a particular type of cell duplication should take place.

When cell duplication occurs, two cells are generated where previously there had been a single cell. One of the cells is the "parent" cell, and the other cell is the "child" cell, see Figure 3. Both the parent and child cell receive exact duplicates of all the logic units in the original cell. The values of all the output signals are also duplicated in both the parent and child cell.

The difference between the parent and child cell is only reflected in the class of input signals called the "developmental input signals" 104. The developmental input signals differ from other input signals in that the development input signals are not given by the output signals of some other logic unit. Instead, the development input signals are generated during a cell development event. For example, when a cell duplication event occurs, one developmental input signal is normally used to indicate that cell duplication has occurred, and another developmental input signal is used to mark whether the newly generated cell is a parent cell or a child cell. This latter developmental input signal can allow the logical circuitry of a cell to behave differently depending on whether the cell is a child or parent cell.

**Restructuring the network after cell development events**

After a cell development event occurs, the neighborhood structure of the network is updated. After cell duplication, the newly generated parent and child cells are always neighbors of each other, and each also is a neighbor of some subset of the original cell's neighbors. Herein, neighbor means that there is direct connection between the cells, without any other intervening cells.

Similarly, after cell elimination occurs, the cells that neighbored the eliminated cells update their neighborhoods. Finally, cell re-arrangement events follow some set of rules for updating the neighborhood of the affected cell.

The rules, by which the neighborhood structure updated, are specified in the program 140 for the network as a set of "cell development neighborhood rules."

The following is an illustrative example for one possible set of rules, which includes only the possibility of cell duplication, but not cell re-arrangement or cell elimination. In the example set of cell development neighborhood rules, the overall network is always assumed to occupy a square area, with units that span from 0.0 to 1.0 in the horizontal and vertical directions, see Figure 3.

The initial network consists of a single cell 301 occupying the entire area. Cell duplication causes a cell to be replaced in place by the parent cell 311 and child cell 312, so that the parent cell occupies half the area previously occupied by the original cell, while the child cell occupies the other half of the area. In this example, two types of cell duplication events are possible, one in which the parent cell is placed to the left of the new child cell in half of the area of the original cell, and the other where the parent cell is placed below the new child cell.

In this example set of cell development neighborhood rules, cells are considered to be neighboring if they are adjacent to each other. Figure 3 shows an example of a series of cell duplications according to these rules. Starting with an initial network of a single cell, there are a total of 4 cells duplications, ultimately creating a network of five cells. The final neighborhood structure of the network 305 is shown as well.

In this example, the cell development neighborhood rules were derived using a geometric characterization where the cells "occupied" a given area. It should be understood that other cell development neighborhood rules are possible that make no reference to the geometry of cells occupying an area. For example, the rules can depend strictly on the topological (connectivity) relations of the cells without any geometric considerations.

**Ending the development of the network**

As stated previously, the network is initially a single cell. The initial network might optionally be connected to and receive signals from another network of cells, which might be viewed as a *"mother network'* during its developmental phase, or the network might be isolated from any other signals.

The network is updated according to the rules of the logic units in its cells, and any other relevant rules contained in its program. At the end point time 15 5 specified in the program, the network "turns off' any cell development events, and the structure of the cells in the network becomes static. If the initial network is connected to another network of cells during its development phase, then the initial network is detached from that other network.

The static network is tested 152 to see whether it properly performs the desired input-output function for the network. To test the network, it can be connected to the set of "input nodes" 141, which only transmit signals into the network, and to the set of "output nodes" 142, which only measure signals received from the network. The placement of the input and output nodes and details about what signals are transmitted by the input nodes and measured by the output nodes are specified in the network program 140.

**The network program**

The *"program"* 140 for the network contains all the information necessary for simulating the network. The network program contains a listing of all the logic units 110 in each cell, including the input signals, the output signals, the input-output function performed, and the delays. As a part of this information, the binary or analog nature of all signals is given.

The program also contains rules about which cells and output nodes receive intercellular signals.

The program also specifies reconciliation functions used when multiple logic units produce an identical output signal, and when multiple neighboring cells send an identical inter-cellular signal to another cell.

The program also specifies the cell development neighborhood rules. The program can also specify how the development input signals are set after a cell development event.

The program also specifies what values of developmental output signals trigger development events, and how values of developmental input signals are set after development events.

The program also specifies any connections that the network has during its development phase to another network.

The program also can specify the time at which the developmental phase ends. The total elapsed time for the development phase can be measured by the timing signal 130.

The program also specifies the details of the placement of any fixed input node 141 and output nodes 142 that are connected to the network during its static phase, as well as the intercellular signals that are produced by the input nodes and measured by the output nodes.

**Program for example RAM network**

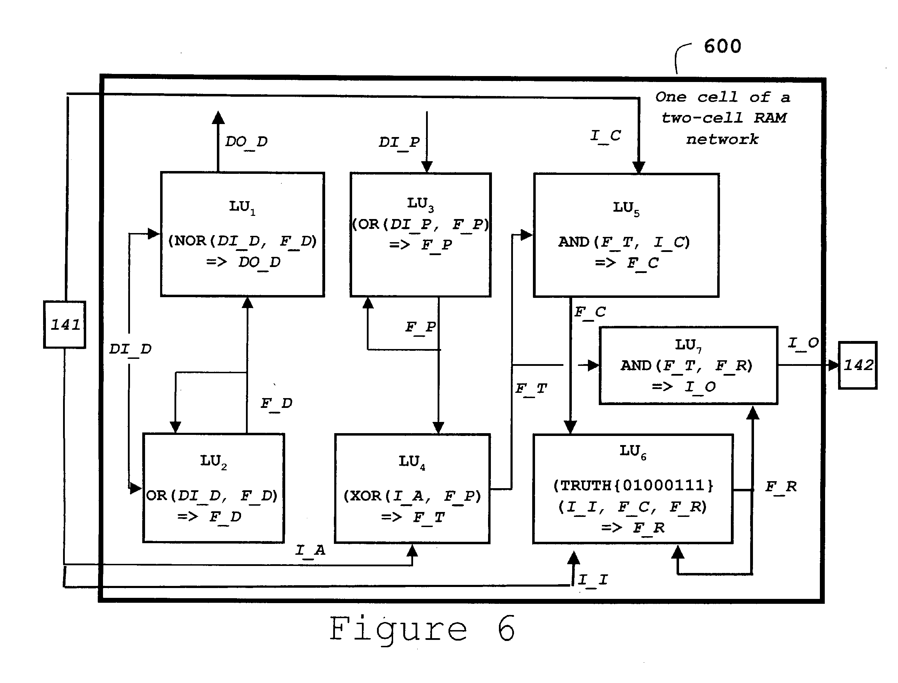

To illustrate the method according to the invention, I describe in detail a program that generates a two-celled network that performs the RAM input-output function described above. To understand the program, it helps to understand the way that signals are labeled within the program and the wiring diagram of the cell 600 of Figure 6.

The program specifies twelve binary signals labeled as follows:
*1. I_A:* an inter-cellular signal that corresponds to the "Address" bit for the RAM.
*2. I_I:* an inter-cellular signal that corresponds to the "Input" bit for the RAM.
*3*. *I*_*C*: an inter-cellular signal that corresponds to the "Control" bit for the RAM.
*4*. *I*_*O*: an inter-cellular signal that corresponds to the "Output" bit for the RAM.
*5. DO_D:* a developmental output signal that causes a cell duplication when it has value 1.
*6. F*_*T*: a factor signal that is used to mark whether a cell is the target of the address bit.
*7. F*_*C*: a factor signal that is used to mark whether the input bit is written to the register.
*8*. *F*_*R*: a factor signal that is used to indicate the output that a cell produces. It is called *"F_R"* because it corresponds to the register value for that cell.
*9. DI_D:* a developmental input signal is set to a value of 1 immediately after cell duplication has occurred.
*10. DI*_*P*: a developmental input signal is set to a value of 1 immediately after a cell duplication if the cell is a parent cell.
*11. F_D:* a factor signal that indicates persistently whether a cell duplication has occurred.
*12*. *F_P*: a factor signal that indicates persistently whether a cell is a parent cell.

The program specifies the following logic units 110 for the cell 600, the notation is explained below:

| | | |
|---|---|---|
| LU₁ | *NOR(DI_D, F_D) => DO_D* | [delay = 1 ] |
| LU₂ | *OR(DI_D, F_D) => F_D* | [delay = 1 ] |
| LU₃ | *OR(DI_P, F_P)* => *F_P* | [delay = 1] |
| LU₄ | *XOR(I_A, F_P)* => *F_T* | [delay = 1 ] |
| LU₅ | *AND(F_T,I_C)* => *F_C* | [delay = 0] |
| LU₆ | TRUTH{01000111}(*I_I*, *F_C, F_R) => F_R* | [delay = 1] |
| LU₇ | *AND(F_T, F_R) => I_O* | [delay = 0] |

The notation given above for the logic units is now explained. Take as an example, the fifth logic unit above. The notation "AND" means that a logical AND is computed from the inputs to compute the output. The notation "(*F_T*, *I*_*C*)" means that the two inputs are the *F*_*T* factor signal and the *I*_*C* inter-cellular signal. The notation " => *F*_*C*" means that the factor signal *F*_*C* is the output signal, while the notation "[delay = 0]" means that the output signal is computed from the input signals after a delay of zero time units.

The notation "TRUTH{...}" used in the sixth logic unit means that a truth table function is used, where the numbers inside the brackets indicate the output values for the inputs 000, 001, 010, 011, 100, 101, 110, and 111, taken in that order. Thus, for example TRUTH{00000001} corresponds to the AND function over three variables that gives an output of 1 if all three variables are 1, and 0 otherwise.

The full specifications in the program 140 are as follows.
1. The logic units are as specified above.
2. All cells or output nodes neighboring a cell or input node receive all of intercellular signals from the cell or input node.
3. The OR function is always used as the reconciliation function.
4. The cell development neighborhood rules are as given in the example described in the section "Restructuring the network after cell development events," with only a single type of cell duplication, such that the parent cell takes up half of the area of the original cell, and the child cell takes up the other half, with the parent cell placed below the child cell.
5. If the developmental output signal *DO_D* has a value of 1, then a cell duplication event is triggered. The developmental input signal *DI_D* is set to one in both the newly generated parent cell and the newly generated child cell immediately after a cell duplication event, and is otherwise set to zero. The developmental input signal *DI_P* is set to one in the newly generated parent cell immediately after a cell duplication event, and is otherwise set to zero.
6. The network is isolated and is not connected to another network during the development phase.
7. The development phase ends when *t=5*.
8. The network is connected to a single input node 141 and a single output node 142 as shown in Figures 4 and 6. The input node produces the three intercellular signals *I_I, I_A,* and *I*_*C*, while the output node measures the intercellular signal *I*_*O*.

**Explanation of example network functions**

The following is an explanation of how the example network successfully implements the RAM input-output function. The static network has two cells, each connected to the input node and the output node as shown in Figures 4. Figure 6 shows the detailed wiring of the logic units and signals inside a single cell 600 of the RAM network. The network is initialized as a single cell.

The 1^{st} logic unit (LU₁), (NOR(*DI_D, F_D) => DO_D* [delay = 1]), triggers a cell duplication event. If there has not been a duplication event before, as recorded by the *DI_D* input development signal or the *F_D* factor signal, then the logic unit sets the *DO_D* development output signal to 1, which triggers a cell duplication.

The 2^{nd} logic unit (LU₂) (OR(*DI_D, F_D) => F_D* [delay = 1]) turns on the factor signal *F_D,* which persistently marks that a cell duplication event has occurred, and ensures, together with the 1^{st} logic unit, that no more duplications occur.

The 3^{rd} logic unit (LU₃) (OR(*DI_P, F_P*) => *F_P* [delay = 1]) turns on a persistent signal in the parent cell, so that the parent cell can be distinguished from the child cell. Note that after *F_D* or *F_P* are set to 1, the 2^{nd} and 3^{rd} logic units ensure that *F_D* and *F_P* stay at 1.

After five time units the development phase ends 155, and the network is attached to the input node 141 and the output node 142. Note that there is nothing special about the choice of five time units, any number of time units greater than or equal to two can work, because of the way the program enforces that exactly one cell duplication occurs and that the factor signal *F_P* persistently marks the parent cell.

The 4^{th} logic unit (LU₄) *(XOR(I_A, F_P) => F_T* [delay = 1]) is used to signal which of the two cells is the target of the address. If the address signal *I_A* is 1, then the target factor signal *F*_*T* is 1 in the parent cell and 0 in the child cell, while if the address signal *I_A* is 0, the target factor signal F_T is 0 in the parent cell and 1 in the child cell.

The 5^{th} logic unit (LU₅) (AND(F_T, *I*_*C*) => *F_C* [delay = 0]) is used to signal whether or not a write should occur in the cell. If the cell is the target (*F_T=1 )* and a control signal was sent from the input node (*I_C*=*1*), then the *F_C* factor control signal is set to 1, otherwise *F*_*C* is set to 0.

The 6^{th} logic unit (LU₆) (TRUTH{01000111 (I_I, *F_C, F_R)* => *F_R* [delay = 1]) is used to set the value of the register factor signal *F*_*R*. If *F_C* is 1, then *F*_*R* is set to the value of the input signal *I_I.* If *F_C* is 0, then *F*_*R* is set to equal its previous value.

The 7^{th} logic unit (LU₇) (AND(*F_T, F_R) => I*_*O* [delay = 0]) sets the output intercellular signal *I*_*O* to the value of the register for the cell that has been addressed.

This example uses only two cells in the network, and a simple network input-output function to simplify the explanation. However, it should be understood that the method can be used to generate networks with a very large number of cells implementing complicated functions.

**Programming the network**

The program for a network can be selected in a variety of ways, e.g., by manually or automatically selected procedures.

Such an automated procedure uses a "fitness" value for each network that reflected how well the network implements the desired input-output function and how many computational resources, e.g., logic units and/or signals) the network requires. A large fitness value is assigned to those networks that correctly perform the desired input-output function while using a minimal amount of computational resources.

An automated procedure also requires a way to change a program to another relatively similar program. This can be done by changing the logic units. Possible changes in a logic unit can include changing individual inputs or outputs of the logic unit, and changing the logic function computed by the logic unit.

The automated procedure searches in the space of possible programs for a program with high fitness. This search can use a conventional optimization method such as hill-climbing or simulated annealing. It can also use a genetic algorithm, operating on a population of programs 140 for a set of networks. Genetic algorithms are well-suited to searching for networks with high fitness, because a change in the program is automatically reflected in the operation of a large number of cells of the network.

When a network of sufficient fitness is discovered, the network can be implemented either in software or hardware. Because each cell in the network includes identical logic units, the hardware implementation of the network can potentially be very cost-efficient for networks containing a large number of cells.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. A network 100 for performing an input-output function, comprising:
a set of cells 110, in which each cell 110 has an identical structure and in which neighboring cells 110 are connected to each other to form a network 100, and in which each cell 110 further comprises:
a set of logic units 120 configured to perform an input-output function, and in which the logic units 120 output factor signals 101, inter-cellular signals 102 and developmental output signals 103, the factor signals 101 being input signals for the set of logic units 120 in the same cell 110, the inter-cellular signals 102 being input signals for the set of logic units 120 in the neighboring cells 110, and the developmental output signals 103 initiating development events, and in which developmental input signals 104 to the logic units 120 are set after the development events for the set of logic units 120 in the same cell 110, and in which a structure of the set of logic units 120 in each cell 110 is identical.

2. The network 100 of claim 1, in which the network 100 during a development phase has initially one initial cell 110, and the development events duplicate the initial cell 110.

3. The network 100 of claim 2, in which the cells 110 of the network 100 are duplicated for a predetermined amount of time during the development phase as measure by a timing signal.

4. The network 100 of claim 3, in which the network 100 is made static at an end of the development phase.

5. The network 100 of claim 4, in which the static network is implemented in hardware.

6. The network 100 of claim 4, in which the static network is implemented in software.

7. The network 100 of claim 4, in which during the development phase, the cells 110 of the network 100 are connected to another network 100 of cells 110.

8. The network 100 of claim 4, further comprising:
means for testing a fitness of the network 100 to perform the input-output function.

9. The network 100 of claim 1, in which the network 100 is in a form of a memory, and the input-output function randomly accesses the memory.

10. The network 100 of claim 4, further comprising:
a program 140 configured to completely specify a structure of the initial cell 110, all input signals for the set of cells 110, and rules for duplicating the initial cell 110 to form the static network.

11. The network 100 of claim 2, further comprising:
means for simulating the development phase.

12. The network 100 of claim 1, in which each logic unit 120 has a known delay.

13. The network 100 of claim 1, in which the development events include cell duplication, cell re-arrangement, and cell elimination.

14. The network 100 of claim 2, in which the duplication produces an identical parent cell 311 and an identical child cell 312 connected to the parent cell 311.

15. The network 100 of claim 8, in which a set of networks are generated by duplication, and further comprising:
means for measuring the fitness of each network, and selecting a particular network with a high fitness as the static network.

16. The network 100 of claim 1, further comprising:
a clock 135 configured for synchronizing an operation of the network 100.

17. The network 100 of claim 1, in which an operation of the network 100 is unsynchronized.

18. The network 100 of claim 10, in which the program 140 includes all information necessary for simulating the network 100.

19. The network 100 of claim 10, in which the program 140 specifies reconciliation functions used when multiple logic units 120 produce identical output signals.

20. The network 100 of claim 10, in which the program 140 specifies reconciliation functions for when multiple neighboring cells 110 send identical inter-cellular signals 102 to another cell 110.

21. A computer implemented method for generating a network 100 for performing an input-output function, comprising the step of:
generating a set of cells 110, in which each cell 110 has an identical structure and in which neighboring cells 110 are connected to each other to form a network 100, and in which the generating of each cell 110 further comprises the step of:
generating a set of logic units 120 configured to perform an input-output function, and in which the logic units 120 output factor signals 101, inter-cellular signals 102 and developmental output signals 103, the factor signals 101 being input signals for the set of logic units 120 in the same cell 110, the inter-cellular signals 102 being input signals for the set of logic units 120 in the neighboring cells 110, and the developmental output signals 103 initiating development events, and in which developmental input signals 104 to the logic units 120 are set after the development events for the set of logic units 120 in the same cell 110, and in which a structure of the set of logic units 120 in each cell 110 is identical.

22. The method of claim 21, in which the network 100 during a development phase has initially one initial cell 110, and the development events duplicate the initial cell 110.

23. The method of claim 22, in which the cells 110 of the network 100 are duplicated for a predetermined amount of time during the development phase as measure by a timing signal.

24. The method of claim 23, in which the network 100 is made static at an end of the development phase.

25. The method of claim 24, in which the static network 100 is implemented in hardware.

26. The method of claim 24, in which the static network 100 is implemented in software.

27. The method of claim 24, in which during the development phase, the network 100 is connected to another network 100 of cells 110.

28. The method of claim 24, further comprising:
testing a fitness of the network 100 to perform the input-output function.

29. The method of claim 21, in which the network 100 is in a form of a memory, and the input-output function randomly accesses the memory.

30. The method of claim 24, further comprising:
configuring a program 140 to completely specify a structure of the initial cell 110, all input signals for the set of cells 110, and rules for duplicating the initial cell 110 to form the static network.

31. The method of claim 22, further comprising:
simulating the development phase with software.

32. The method of claim 21, in which each logic unit 120 has a known delay.

33. The method of claim 21, in which the development events include cell duplication, cell re-arrangement, and cell elimination.

34. The method of claim 22, in which the duplication produces an identical parent cell 311 and an identical child cell 312 connected to the parent cell 311.

35. The method of claim 28, in which a set of networks are generated by duplication, and further comprising:
measuring the fitness of each network, and selecting a particular network with a high fitness as the static network.

36. The method of claim 21, further comprising:
synchronizing an operation of the network 100.

37. The method of claim 21, in which an operation of the network 100 is unsynchronized.

38. The method of claim 30, in which the program 140 includes all information necessary for simulating the network 100.

39. The method of claim 30, in which the program 140 specifies reconciliation functions used when multiple logic units 120 produce identical output signals.

40. The method of claim 21, in which input signals to the logic units 120 and output signals from the logic units 120 are digital signals.

41. The method of claim 21, in which input signals to the logic units 120 and output signals from the logic units 120 are analog signals.

42. The method of claim 21, in which input signals to the logic units 120 and output signals from the logic units 120 include digital and analog signals.

43. The method of claim 39, in which input signals to the logic units 120 and output signals from the logic units 120 are digital signals, and in which the reconciliation functions for the digital signals are OR functions.

44. The method of claim 39, in which input signals to the logic units 120 and output signals from the logic units 120 include digital and analog signals, and in which the reconciliation functions for the digital signals are OR functions, and the reconciliation functions for the analog signals are addition functions.

45. The method of claim 39, in which input signals to the logic units and output signals from the logic units 120 include digital and analog signals, and in which the reconciliation functions for the digital signals are OR functions, and the reconciliation functions for the analog signals are soft-OR functions.
